# EUROPEAN PATENT SPECIFICATION

(11) **EP 3 788 322 B1**
(45) Date of publication and mention of the grant of the patent: **27.07.2022**
(21) Application number: 19724340.5
(22) Date of filing: 29.04.2019
(51) Int. Cl.: G01D 21/00

(54) **ROAD EQUIPMENT MONITORING DEVICE**
ÜBERWACHUNGSVORRICHTUNG FÜR STRASSENAUSRÜSTUNG
DISPOSITIF DE SURVEILLANCE D'ÉQUIPEMENT ROUTIER

(30) Priority: 01.05.2018 DK PA201800190
(43) Date of publication of application: 10.03.2021
(73) Proprietor: Safesign IVS, 8940 Randers SV (DK)
(72) Inventor: STABELL, Ole, 8940 Randers SV (DK)
(74) Representative: Andreasen, Søren Laursen Vasegaard
(86) International application number: PCT/DK2019/050129
(87) International publication number: WO 2019/210921

(56) References cited:
- WO-A1-2017/072109
- US-A1- 2005 190 059
- US-A1- 2014 039 837

## Description

### Field of invention

The present invention relates to a road equipment monitoring device for monitoring a road equipment such as a signpost or a roadblock. The present invention moreover relates to a system comprising such road equipment monitoring device and a receiving unit configured to directly or indirectly, wirelessly communicate with the monitoring device.

### Prior art

Temporary traffic control is often required in construction and work zones. Temporary traffic control will typically require the use of road equipment such as roadblocks as well as direction, position, indication or danger warning signs. These types of road equipment typically include moveably arranged structures such as a base, to which one or more post members are attached, wherein a signpost or another structure is fixed to the one or more post members.

It is vital that the road equipment is positioned and orientated in a correct manner so that the road equipment functions as required. Accordingly, personnel are typically required to manually control that the road equipment is positioned and orientated in a correct manner.

If a danger warning sign is toppled over after a windy night by way of example, the danger warning sign is not visible and thus it cannot give the information to road user as intended. Therefore, regulations often specify that the position and orientation of "essential road equipment" must be controlled within regular intervals such as every third hour. In most situations, the required control process is time consuming and requires personnel having a motorised vehicle. Furthermore, at night time, the road equipment can only be seen if the personnel have access to light. Therefore, the required control process is expensive and demanding.

WO2017072109A1 discloses a sign monitoring apparatus configured to be mounted on a sign. The sign monitoring apparatus comprises a first sensor configured to measure a first parameter indicative of a position of the sign and/or a second sensor configured to measure a second parameter indicative of a condition related to the sign. The sign monitoring apparatus comprises a processing unit operatively connected to the first and/or second sensor. The processing unit is configured to generate monitoring data indicative of a state of the sign based on the measured first and/or second parameter and an interface unit configured to communicate the monitoring data. The sign monitoring apparatus is configured to compare previous monitoring data and the monitoring data to obtain a difference result, and determining if the difference result is equal or larger than a warning threshold. The sign monitoring apparatus, in response to the difference result being equal or larger than a warning threshold, the processing unit is configured to generate a warning signal and communicate the generated warning signal, to e.g. a sign monitoring data collector apparatus. However, when a sign is place outdoor, wind may occasionally blow in different directions and hereby cause the sign to sway in the wind. It may, however, be allowable if the position and/or orientation of the sign returns into its initial values within a brief time period. Therefore, the sign monitoring apparatus disclosed in WO2017072109A1 is associated with a risk of generating a false alarm, and thus erroneously report an emergency, causing unnecessary panic and/or bringing resources (such as emergency services) to a place where they are not needed.

Accordingly, there is a need for an improved road equipment monitoring device that eliminates the need for manually monitoring vital road equipment and at the same time eliminates the risk for generating a false alarm.

### Summary of the invention

The object of the present invention can be achieved by a monitoring device as defined in claim 1 and by a system as defined in claim 7. Preferred embodiments are defined in the dependent subclaims, explained in the following description and illustrated in the accompanying drawings.

The road equipment monitoring device according to the invention is a road equipment monitoring device configured for monitoring the position of a road equipment, wherein said monitoring device comprises a housing comprising a power source and a control unit electrically connected to the power source and being configured to monitor the position of the road equipment, wherein the monitoring device comprises: an accelerometer configured to measure the position of the road equipment, an orientation detection member adapted to measure the orientation of the road equipment, a processing unit connected to the accelerometer and the orientation detection member and being configured to process data from said accelerometer and orientation detection member and hereby generate data information, a communication unit configured to communicate wirelessly via the Internet, wherein said communication unit is configured to wirelessly send signals containing said data information about the position of the road equipment and the orientation of the road equipment, wherein the monitoring device is configured to generate an alarm when the position and/or orientation of the monitoring device is no longer within a predefined range for a predefined time period, wherein the predefined time period is a time period of one second, 5 seconds, 15 seconds, 30 seconds, one minute, two minutes, 5 minutes or a longer time period.

Hereby, it is possible to provide a monitoring device that eliminates the need for manually monitoring vital road equipment such as a signpost or a roadblock and eliminates the risk for generating a false alarm.

The road equipment monitoring device is configured for monitoring the position of a road equipment in order to detect if the road equipment is being translated or rotated (change of orientation). Road equipment may include a signpost, a roadblock, a traffic cone or another type of equipment used on a road. A signpost may be a direction, position, indication or danger warning sign. Road equipment may include a fence post, a bar, a gate or a barrier. Accordingly, road equipment may include structures that are not used on roads but in a field (e.g. a festival field) or in a building site.

The monitoring device comprises a housing comprising a power source and a control unit electrically connected to the power source and being configured to monitor the position of the road equipment. The housing may have any suitable size and geometry. In one embodiment, the housing is basically box-shaped.

The power source may preferably be a battery. In one embodiment, the power source is a battery having sufficiently capacity to power the power consuming elements of the monitoring device in long time periods, preferably in time periods of several days, months or even years.

In one embodiment, the power source is a battery having a capacity large enough to power the power consuming elements of the monitoring device in at least 12 months.

In a preferred embodiment, the power source is a battery having a capacity sufficiently to power the power consuming elements of the monitoring device in at least 36 months.

The control unit may comprise a printed circuit board (PCB). The control unit may have any suitable size and geometry.

The monitoring device comprises an accelerometer configured to measure the position of the road equipment. In one embodiment, the accelerometer is a three-axis accelerometer. The accelerometer is configured to detect the acceleration of the monitoring device and to determine the position and/or change in position of the monitoring device. Accordingly, the monitoring device can detect the position and/or change in position of the road equipment to which the monitoring device is attached. It is preferred, that the position and/or change in position of the monitoring device is detected with respect to a predefined reference coordinate system.

In one embodiment, the orientation detection member is a gyroscope adapted to measure the orientation of the road equipment. In one embodiment, the gyroscope is a three-axis gyroscope. The gyroscope is configured to detect the orientation (angular position) and/or change in orientation of the monitoring device. Therefore, the monitoring device can detect the orientation and/or change in orientation of the road equipment to which the monitoring device is attached. It is preferred, that the orientation and/or change in orientation of the monitoring device is detected with respect to a predefined reference coordinate system.

In one embodiment, the orientation detection member is a compass. It may be possible to apply orientation detection members corresponding to the ones that are used in smartphones.

In one embodiment, the orientation detection member is a magnetometer configured to measure the Earth's magnetic field.

In a preferred embodiment, the monitoring device is configured in such a manner that the predefined reference coordinate system is defined by a calibration process initiated by using an electric switch. The electric switch may be protruding from the housing of the monitoring device.

In another embodiment, the monitoring device is configured in such a manner that the predefined reference coordinate system is defined by a calibration process initiated by using an external device and/or a server to transmit setting information to the monitoring device.

The processing unit may be a processor of any type and size. The processing unit is connected to the accelerometer and the orientation detection member (e.g. a gyroscope or compass) by one or more wireless or wired connections. The processing unit is configured to process data from the accelerometer and orientation detection member and hereby generate data information.

These data can be transmitted to a user by means of the communication unit that is configured to communicate wirelessly via the Internet or an external receiver. Hereby, the data can be received by one or more users on a continuous basis in an easy manner.

The communication unit is configured to wirelessly transmit signals containing said data information about the position of the road equipment and the orientation of the road equipment. Accordingly, the need for manually controlling that the road equipment is in the right position and orientation is eliminated.

It may be preferred that the communication unit is configured to transmit wireless signals with a predefined frequency e.g. once every hour, once every half hour, once every 15 minutes or more frequently.

In one embodiment, the frequency with which the communication unit transmits wireless signals is configurable. In one embodiment, the frequency with which the communication unit transmits wireless signals can be set by transmitting setting information to the monitoring device by means of a server or an external device (e.g. a smartphone or a tablet).

It may be advantageous that the monitoring device comprises a positioning device, wherein the positioning device is configured to determine the position of the tracking device. The positioning device may be a global satellite-based navigation system such as a GPS receiver, a GLONASS navigation device or a Galileo navigation device. It may be an advantage that the monitoring device comprises a positioning device when the monitoring device is unintendedly being moved over longer distances (e.g. 100 m or more) e.g. by a thief.

In a preferred embodiment, the positioning device is turned off by default and activated when the accelerometer detects a change in position that exceeds a predefined level. It may be advantageous that the positioning device is configured to track the position of the monitoring device on a continuous basis once the positioning device has been activated and that the position data detected by the positioning device is transmitted to a server or an external device on a continuous basis (e.g. once every minute, once every 5 minutes, once every 15 minutes or less frequently).

It may be beneficial that the monitoring device comprises one or more integrated attachment structures. Hereby, it is possible to fix the monitoring device to road equipment in a fast, easy and user-friendly manner.

In one embodiment, the attachment structures include one or more band members configured to be clamped around a post or another structure of the road equipment. Preferably, the attachment structures include a structure for tightening the one or more band members in order to maintain the monitoring device fixed to the road equipment.

In one embodiment, the attachment structure(s) are magnetic attachment structure. Each of these magnetic attachment structure(s) may be formed as disc-shaped permanent magnets that are attached to an end surface of the housing of the monitoring device so that the magnetic attachment structure protrudes from the end surface of the housing.

It may be an advantage that the monitoring device comprises a manually operable switch and/or a Near Field Communication (NFC) tag, wherein the monitoring device is configured to initiate a calibrating process, in which position and orientation of the monitoring device is calibrated/set. Hereby, the monitoring device can be calibrated by pressing the electric switch and/or the NFC tag so that a reference coordinate system is defined based on the position and orientation of the monitoring device in the moment, in which the electric switch is pressed, and/or the NFC tag is activated.

The electric switch may be electrically connected to a PCB of the monitoring device wirelessly or by means of cables. In a preferred embodiment, the electric switch protrudes from a side wall of the housing. In another embodiment, the electric switch is aligned with a side wall of the housing.

In one embodiment, the monitoring device comprises a NFC tag configured to communicate with a smartphone or another enabled device. Hereby, it is possible, by swiping a smartphone or another enabled device over the NFC tag to carry out communication between the monitoring device and the smartphone or the other enabled device. It is preferred that the monitoring device is configured to initiate a calibrating process, in which position and orientation of the monitoring device is calibrated/set by means of the NFC tag. Hereby, the monitoring device can be calibrated by bringing a smartphone or another enabled device in the proximity of the NFC tag. Thus, a reference coordinate system can be defined based on the position and orientation of the monitoring device in the moment, in which the NFC tag is activated by means of a smart phone or another enabled device.

In a preferred embodiment, the electric switch or a NFC tag is configured to bring the monitoring device from a turned off configuration to a turn on configuration and vice versa. It may be an advantage that the electric switch or the NFC tag allows the monitoring device to be turned off when a moveably arranged signpost has to be moved from one place to another or when the monitoring device has to be stored for longer time periods.

It may be an advantage that the monitoring device is configured to be externally turned on and/or turned off and/or calibrated/set. Externally means "by means of an external device" such as a smartphone, a tablet, a computer or a server configured to communicate with the monitoring device.

The monitoring device is configured to generate an alarm when the position and/or orientation of the monitoring device is no longer within a predefined range. Hereby, a person responsible for road equipment can be notified when something is wrong (when the position and/or orientation of the monitoring device is no longer within a predefined range). Accordingly, the person can control if everything (with regards to the road equipment) is as it should be or if the position and/or orientation of the road equipment needs to be corrected.

It may be an advantage that a receiving unit (e.g. a server) is configured to generate an alarm when the position and/or orientation of the monitoring device is no longer within a predefined range.

It may be advantageous that the monitoring device is configured to generate an alarm when the position and/or orientation of the monitoring device is not within a predefined range for a predefined time period. Hereby, the position or orientation is allowed to be out of the preferred range in a short time period. Since the monitoring device is brought into the preferred position and/or orientation range after a short time period, no action is required and thus there is no need for generating an alarm. The time period is one second, 5 seconds, 15 seconds, 30 seconds, one minute, two minutes, 5 minutes or a longer time period.

In a preferred embodiment, the time period referred to may be set and changed e.g. by means of an external device such as a smartphone, a tablet, a computer or a server.

It may be advantageous that the monitoring device is configured to carry out noise filtering of data from the accelerometer and/or the orientation detection member. Hereby, noise can be reduced or even removed so that the "true" signal can be detected. The noise filtering may preferably be carried out in the processing unit of the monitoring device. It is, however, possible to carry out processing steps such as noise reduction/filtering in a server that is configured to receive data from the monitoring device.

In one embodiment, the monitoring device is configured to carry out high frequency noise reduction. This can be carried out by using a low-pass filter.

In one embodiment, the monitoring device is configured to carry out low frequency noise reduction. This can be carried out by using a high-pass filter.

It may be an advantage that the monitoring device is configured to carry out battery monitoring to make sure that the capacity of the battery is sufficient. In one embodiment, the PCB of the monitoring device comprises an electronic structure configured to carry out battery monitoring of a battery of the monitoring device. It is preferred that the monitoring device is configured to transmit signals containing information about the capacity of the battery.

It may be beneficial that the monitoring device is configured to transmit signals containing information about the capacity of the battery on a continuous basis.

In one embodiment, the monitoring device is configured to transmit signals containing information about the capacity of the battery when the capacity of the battery is below a predefined level.

It may be beneficial that the monitoring device is configured to transmit a confirmation signal to a server or an external device, wherein the confirmation signal is a "I am alive signal" that indicates that the monitoring device is turned on and is operable. If no confirmation signal is received, the user will know that something is wrong, and he can investigate if the monitoring device needs to be replaced.

It is preferred that the confirmation signal is transmitted with a predefined frequency. The predefined frequency may be once every 15 seconds, once every minute, once every 5 minutes, once every 15 minutes, once every 30 minutes, once every hour or less frequently.

In a preferred embodiment, the predefined frequency can be set. It may be an advantage that the predefined frequency can be set externally (by means of a server or an external device).

The object of the invention can be achieved by a system comprising a monitoring device according to one of the invention and a receiving unit configured to directly or indirectly, wirelessly communicate (including receiving and transmitting signals) with the monitoring device and to transmit signals to one or more external devices.

Hereby, it is possible to provide a system that eliminates the need for manually monitoring vital road equipment such as a signpost or a roadblock.

It may be an advantage that the monitoring device is remotely configurable by means of a server and/or an external device.

Hereby, it is possible transmit signals containing software updates or setting data to the monitoring device so that the monitoring device can be updated remotely.

It may be advantageous that the receiving unit (e.g. a server) is configured to generate an alarm when the position and/or orientation of the monitoring device is no longer within a predefined range for a predefined time period.

Hereby, it is possible to provide a simple monitoring device that does not need to be capable of generating an alarm. The monitoring device is only required to be capable of collecting and transmitting position and orientation data to the receiving unit.

### Description of the Drawings

The invention will become more fully understood from the detailed description given herein below. The accompanying drawings are given by way of illustration only, and thus, they are not limitative of the present invention. In the accompanying drawings:
- Fig. 1A: shows a cross-sectional view of monitoring device according to the invention;
- Fig. 1B: shows a perspective, top view of the monitoring device shown in Fig. 1A;
- Fig. 2A: shows a monitoring device according to the invention arranged in a first position;
- Fig. 2B: shows the monitoring device shown in Fig. 2A arranged in a second position;
- Fig. 2C: shows a monitoring device according to the invention arranged in a first orientation;
- Fig. 2D: shows the monitoring device shown in Fig. 2A arranged in a second orientation;
- Fig. 3A: shows a monitoring device according to the invention in a first configuration;
- Fig. 3B: shows the monitoring device shown in Fig. 3A in a second configuration;
- Fig. 3C: shows a monitoring device according to the invention attached to a post member of a signpost;
- Fig. 3D: shows a top view of a portion of a monitoring device that is attached to a post member of a signpost;
- Fig. 4A: shows a perspective view of a housing of a monitoring device according to the invention being fixed to a signpost by means of screws;
- Fig. 4B: shows a perspective view of a monitoring device according to the invention provided with magnetic attachment means;
- Fig. 4C: shows the monitoring device shown in Fig. 4B attached to a signpost;
- Fig. 5: shows how a monitoring device according to the invention communicates with a server and external devices;
- Fig. 6A: shows a graph depicting the angular position of a monitoring device according to the invention as function of time;
- Fig. 6B: shows a graph depicting the position of (the center of gravity of) a monitoring device according to the invention as function
- Fig. 7A: of time; shows a cross-sectional view of a monitoring device;
- Fig. 7B: shows the monitoring device 2 shown in Fig. 7A in a configuration, in which the monitoring device has been mounted in the open end of the post member;
- Fig. 7C: shows a cross-sectional view of a monitoring device according to the invention;
- Fig. 8A: shows a graph depicting the position (a first signal and a second signal) as function of time;
- Fig. 8B: shows a monitoring device attached to a post member in a first height above the ground;
- Fig. 8C: shows a monitoring device attached to a post member in a higher height above the ground;
- Fig. 9A: shows a perspective view of a monitoring device according to the invention and
- Fig. 9B: shows a side view of a monitoring device according to the invention.

### Detailed description of the invention

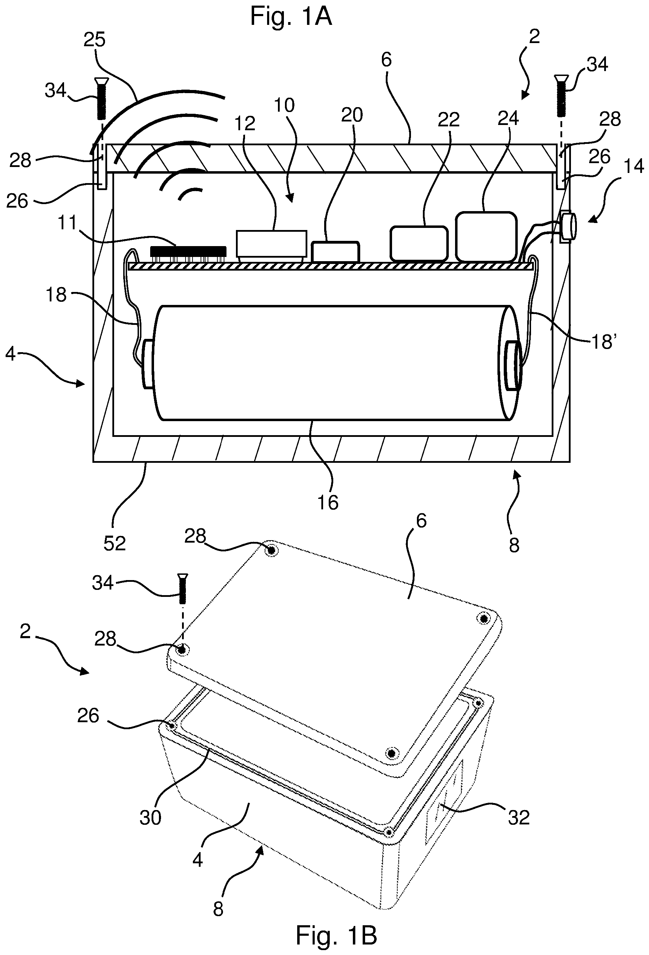

Referring now in detail to the drawings for the purpose of illustrating preferred embodiments of the present invention, a monitoring device 2 of the present invention is illustrated in Fig. 1.

Fig. 1A illustrates a cross-sectional view of a monitoring device 2 according to the invention. The monitoring device 2 comprises a housing 4 having a base portion 8 having an opening and a lid 6 configured to be received by the base portion 8 in such a manner that the lid 6 closes the opening of the base portion 8. The lid 6 is provided with bore portions 28 configured to receive a screw 34 in order to mechanically fix the lid 6 to the base portion 8 of the housing 4.

The base portion 8 of the housing 4 is provided with corresponding threaded bore portions 26 arranged to be extending in extension of the bore portions 28 of the lid 6 when the lid 6 is arranged in a position in which it can be attached to the base portion 8 of the housing 4.

The monitoring device 2 comprises a printed circuit board (PCB) 10 provided with a processor 11, an antenna 12, a positioning device 20 being a satellite based navigation device (e.g. a GPS navigation device), an accelerometer 22 and an orientation detection member (e.g. a gyroscope or a compass) 24.

The monitoring device 2 comprises a battery 16 that is electrically connected to the PCB 10 by means of cables 18, 18'. The positioning device 20 is configured to track the position of the monitoring device 2 so that the position of the monitoring device 2 can be registered and transmitted in the form of a wireless signal 25 by means of the antenna 12. This function is beneficial if the monitoring device 2 is being moved over longer distances (e.g. 100 m or more). In a preferred embodiment, the positioning device 20 is configured to track the position of the monitoring device 2 on a continuous basis.

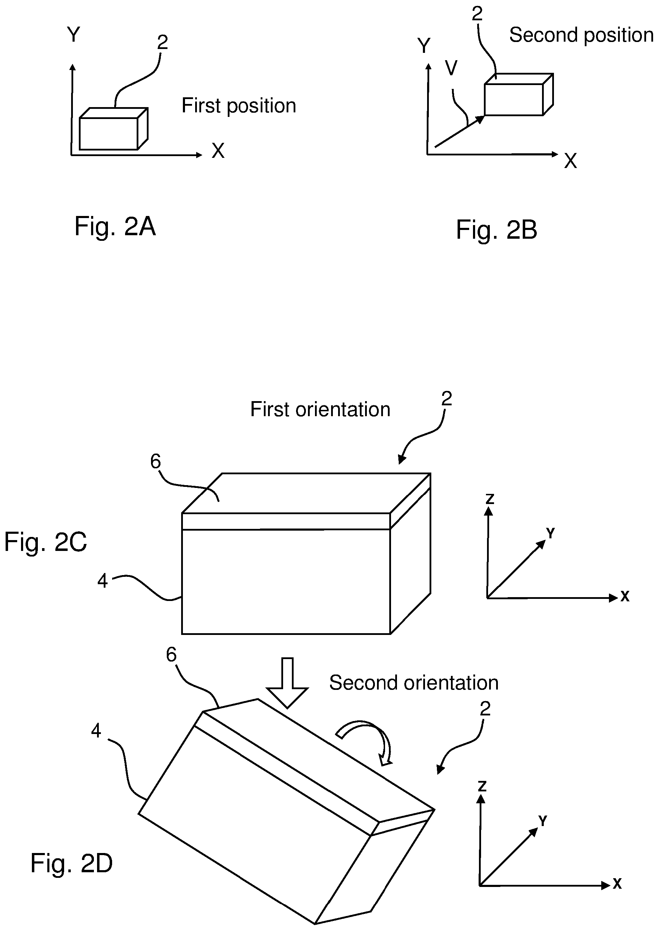

The accelerometer 22 is configured to detect the position with respect to a predefined reference coordinate system (see Fig. 2A and Fig. 2B) and/or a change in the position (with respect to said reference coordinate system) of the monitoring device 2, preferably on a continuous basis. In a preferred embodiment the accelerometer 22 is configured to detect the three-dimensional position of the monitoring device 2 and/or change in the three-dimensional position of the monitoring device 2.

The orientation detection member (e.g. a gyroscope or a compass) 24 is configured to detect the orientation with respect to a predefined reference coordinate system (see Fig. 2C and Fig. 2D) and/or a change in the orientation position of the monitoring device 2, preferably on a continuous basis.

In a preferred embodiment, the accelerometer 22 is configured to detect the three-dimensional position of the monitoring device 2 and/or change in the three-dimensional position of the monitoring device 2.

An electric switch 14 is electrically connected to the PCB 10 via cables. The electric switch 14 protrudes from the side wall of the housing 4. The electric switch 14 is electrically connected to a portion of the PCB 10 that is configured to set/calibrate the monitoring device 2 upon activating the electric switch 14 (by pressing the electric switch 14).

Accordingly, when the monitoring device 2 is attached to a road equipment such as a signpost, the monitoring device 2 is arranged in a fixed position relative to the monitoring device 2. Accordingly, the monitoring device 2 can simply be calibrated by pressing the electric switch 14 so that the above-mentioned reference coordinate system is defined.

Fig. 1B illustrates a perspective, top view of the monitoring device 2 shown in Fig. 1A. The monitoring device 2 comprises a housing 4 comprising a base portion 8 provided with an opening. The monitoring device 2 comprises a lid 6 configured to sealingly close said opening. Threaded bore portions 26 are provided in the upper portion of the base portion 8. Corresponding bore portions 28 are provided in the corner regions of the basically rectangular lid 6.

A sealing member 30 formed as a gasket 30 is arranged long the upper portion of the base portion 8 of the housing 4. Accordingly, the lid 6 can be sealingly attached to the base portion 8 by means of screws 34 screwed into the threaded bore portions 26 of the base portion 8 of the housing 4.

It can be seen that an indicator member 32 is provided at the outside surface of the base portion 8. The indicator member 32 is preferably a light-emitting diode (LED) arranged to provide visual indications (e.g. flashing light).

Fig. 2A illustrates a monitoring device 2 according to the invention arranged in a first position relative to a Cartesian coordinate system having a first axis X and a second axis Y.

Fig. 2B illustrates the monitoring device 2 shown in Fig. 2A arranged in a second position relative to the Cartesian coordinate system.

When the monitoring device 2 is moved from the first position as shown in Fig. 2A to the second position as shown in Fig. 2B, as indicated by the vector V, the accelerometer (not shown) will measure the change in position. A processing unit (not shown) being electrically connected to the accelerometer will process the data from the accelerometer.

Accordingly, the processing unit will generate data information containing said information about the change in position e.g. of a road equipment to which the monitoring device 2 is attached. This data information can now be communicated wirelessly to a receiving unit, preferably a server, by using a communication unit (not shown) of the monitoring device 2.

Fig. 2C illustrates a monitoring device 2 according to the invention arranged in a first orientation relative to a Cartesian coordinate system having a first axis X, a second axis Y and a third axis Z.

Fig. 2D illustrates the monitoring device shown in Fig. 2A arranged in a second orientation relative to the Cartesian coordinate system.

When the orientation of the monitoring device 2 is changed from the orientation position as shown in Fig. 2C to the second orientation as shown in Fig. 2D, as indicated, the orientation detection member (not shown) will measure the change in orientation. A processing unit being electrically connected to the orientation detection member will process the data from the orientation detection member. Thus, the processing unit will generate data information containing said information about the change in orientation e.g. of a road equipment to which the monitoring device 2 is attached. This data information can now be communicated wirelessly to a receiving unit, preferably a server, by using a communication unit of the monitoring device 2.

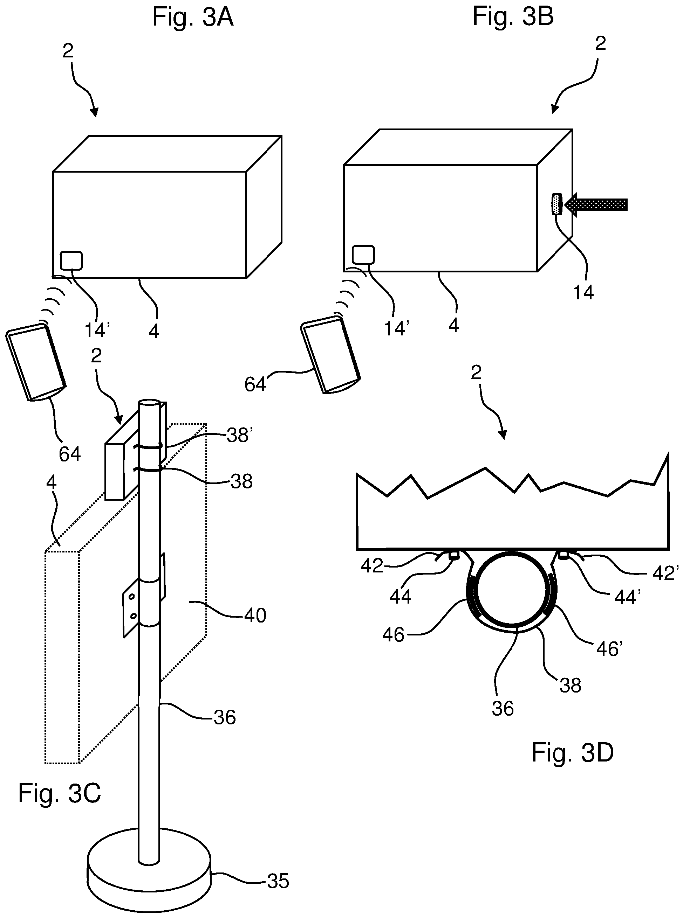

Fig. 3A illustrates a monitoring device 2 according to the invention in a first configuration, in which a NFC tag 14' is activated by means of a smartphone 64.

Fig. 3B illustrates a monitoring device 2 that basically corresponds to the one shown in Fig. 3A. The monitoring device 2, however, comprises an electrical switch 14 that has been activated by pressing it in the direction indicated by the arrow.

An electric switch 14 is electrically connected to the PCB (not shown) inside the housing 4. The electric switch 14 protrudes from the side wall of the housing 4 so that it is easy for the user to press the electrical switch 14 in order to activate it. The electric switch 14 is configured to calibrate the monitoring device 2 upon pressing the electric switch 14.

The NFC tag 14' is electrically connected to the PCB (not shown) inside the housing 4 and is furthermore configured to calibrate the monitoring device 2 upon being activated by bringing a smartphone 64 or another enabled device in proximity to the NFC tag.

Accordingly, when the monitoring device 2 is attached to a structure such as a moveably arranged signpost or a sign arranged on a moveably arranged sign frame, the monitoring device 2 can be calibrated in a simple manner by activating the NFC tag by using a smartphone 64 or another enabled device, wherein the reference coordinate system is defined during the calibration process.

In one embodiment (when the monitoring device 2 comprises an electric switch 14 as shown in Fig. 3B) it is possible calibrate the monitoring device 2 by pressing the electric switch 14. During the calibration process the reference coordinate system is defined.

Fig. 3C illustrates a monitoring device 2 according to the invention attached to a post member 36 of a signpost 40. The post member 36 is attached to a moveably arranged base 35 intended for being positioned on the ground. Accordingly, the signpost 40 can be moved by moving the base 35. The monitoring device 2 is attached to the top portion of the post member 36 by means of two band members 38, 38'. Accordingly, the monitoring device 2 is capable of detecting when the signpost 40 is moved (translated) and/or rotated.

Fig. 3D illustrates a top view of a portion of a monitoring device 2 that is attached to a post member 36 of a signpost corresponding to the one shown in Fig. 3C. The monitoring device 2 is attached to the post member 36 by means of a band member 38 that is attached to a first attachment structure 44 and a second attachment structure 44' protruding from the housing of the monitoring device 2. It can be seen that the end portions 42, 42' of the band member 38 can be pulled in order to pull the band member 38 tight. Resilient members 46, 46' are provided between the band member 38 and the post member 36. The resilient members 46, 46' can be radially compressed hereby increasing the compressive force provided by the band member 38 towards the post member 36. The resilient members 46, 46' may be made of rubber or another suitable material.

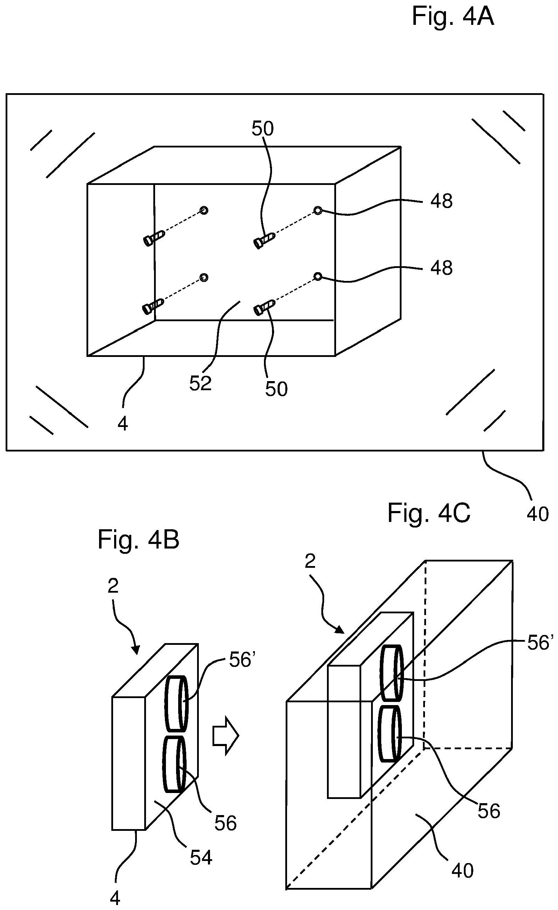

Fig. 4A illustrates a perspective view of a housing 4 of a monitoring device 2 according to the invention being fixed to a signpost 40 by means of screws 50. The screwed 50 can be screwed into screw holes 48 provided in the bottom plate 52 of the housing 4. A washer (not shown) and/or a sealing structure (e.g. an annular rubber element) may be applied when screwing the screw 50 into the screw hole 48.

Fig. 4B illustrates a perspective view of a monitoring device 2 according to the invention provided with magnetic attachment means 56, 56'. The magnetic attachment means 56, 56' are formed as disc-shaped permanent magnets that are attached to an end surface 52 of the housing 4. Accordingly, the magnetic attachment means 57, 57' protrude from the end surface 52.

Fig. 4C illustrates the monitoring device 2 shown in Fig. 4B attached to a signpost 40. The magnetic attachment means 57, 57' protruding from the end surface of the housing of the monitoring device 2 are attached to the signpost 40 by magnetic attraction. This is possible if the signpost 40 comprises a portion made of a magnetisable material, preferably a ferromagnetic material.

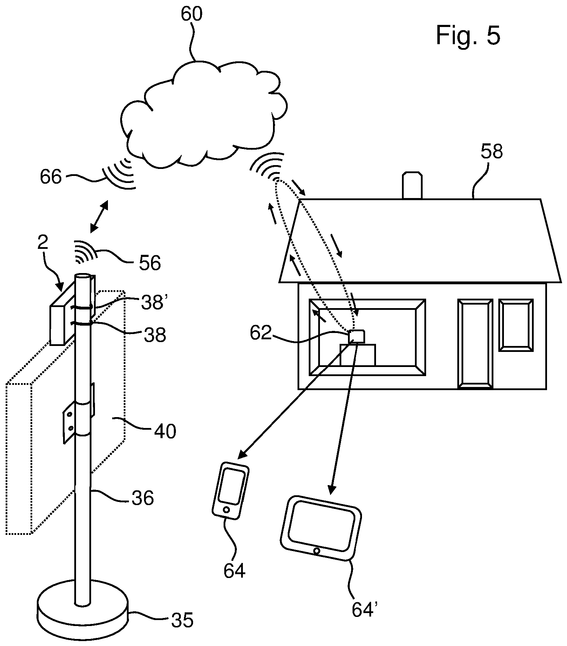

Fig. 5 illustrates how a monitoring device 2 according to the invention communicates with a server 62 and external devices 64, 64'. The monitoring device 2 corresponds to the one shown in Fig. 3C. The monitoring device 2 detects the position and orientation of the monitoring device 2 (and thus the signpost 40) on a continuous basis and transmits signals 56 containing the detected position and orientation data. The signals 56 are wirelessly transmitted to a receiving unit 62 being a server 62 arranged in a building 58. The signals 56 are transmitted via the Internet 60.

The server 62 wirelessly transmits data (indicated with arrows) to external receivers 64, 64'. The external receivers 64, 64' may be smartphones, tablets, computers or other devices configured to receive the transmitted data.

Accordingly, a responsible person can monitor the signpost 40 remotely by using the monitoring device 2 according to the invention.

In a preferred embodiment, the monitoring device 2 is configured to generate an alarm in case that the position and/or orientation of the monitoring device 2 (with respect to a predefined reference coordinate system) is no longer within a predefined range.

It may be an advantage that the monitoring device 2 is configured to generate an alarm in case that the position and/or orientation of the monitoring device 2 (with respect to a predefined reference coordinate system) is no longer within a predefined range in a predefined time period.

If the signpost 40 is removed (e.g. stolen) a build-in GPS tracker will transmit the location of the monitoring device (and thus the signpost) so that the signpost can be located and collected.

The monitoring device 2 is configured to receive signals 66 transmitted by the server 62 via the Internet 60. These signals 66 may contain software updates or setting data by way of example. Accordingly, the monitoring device 2 can be updated remotely.

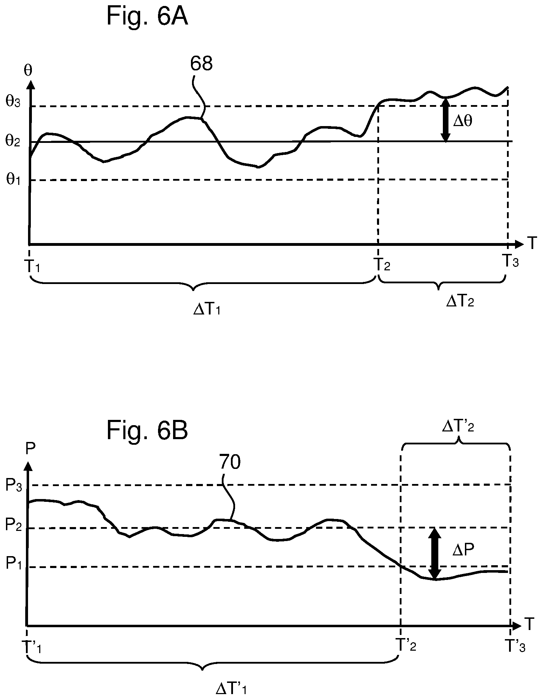

Fig. 6A illustrates a graph 68 depicting the angular position θ of a monitoring device 2 according to the invention as function of time T. A reference angle θ₂ is indicated as a horizontal line. During the initial time period ΔT₁, from a first time T₁ to a second time T₂, the angular position θ remains within a predefined range between a first angular position θ₁ and a second angular position θ₃. At a later time period ΔT₂, from the second time T₂ to a third time T₃, however, the angular position θ exceeds the predefined range because the angular position change Δθ is larger than the difference between the reference angular position θ₂ and the second angular position θ₃.

When the monitoring device detects that the angular position change Δθ exceeds the predefined range, an alarm is generated and send to a server (see Fig. 5) and further to one or more external receivers (see Fig. 5).

Fig. 6B illustrates a graph depicting the position P of (the center of gravity of) a monitoring device according to the invention as function of time T. A reference position P₂ is indicated as a horizontal line. During the initial time period ΔT'₁, from a first time T'₁ to a second time T'₂, the position P remains within a predefined position range between a first position P₁ and a second position P₃. At another time period ΔT'₂, from the second time T'₂ to a third time T'₃, however, the position P exceeds the predefined position range as the position change ΔP is larger than the difference between the reference position P₂ and the second position P₃. The monitoring device detects that the change in position ΔP exceeds the predefined range. Accordingly, the monitoring device generates and sends an alarm to a server and further to one or more external receivers (as explained with reference to Fig. 5).

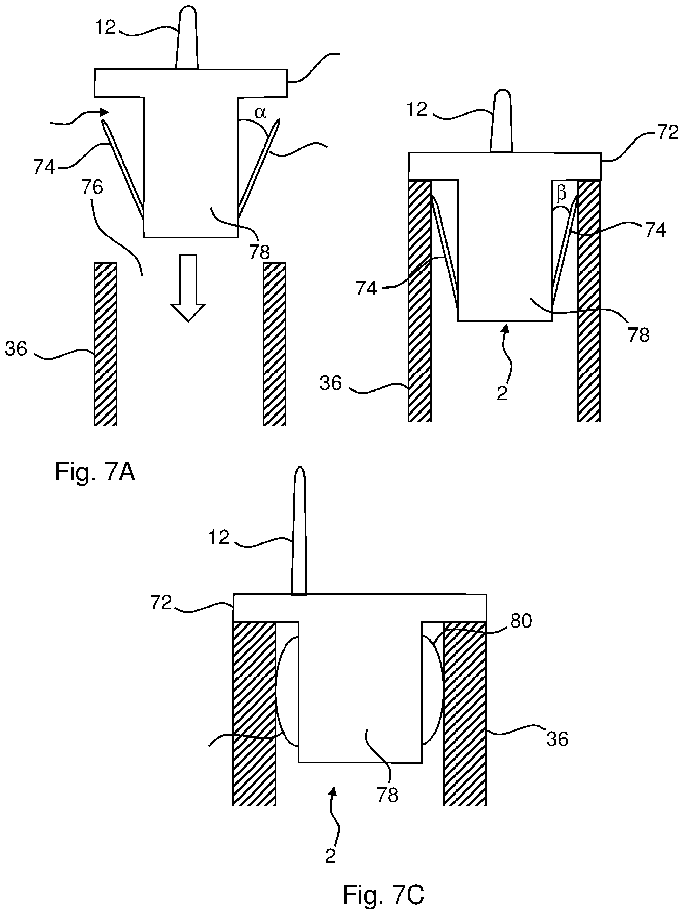

Fig. 7A illustrates a cross-sectional view of a monitoring device 2 according to the invention being mounted in the opening 76 provided in the open end of a post member 36. Fig. 7B illustrates the monitoring device 2 shown in Fig. 7A in a configuration, in which the monitoring device 2 has been mounted in the open end of the post member 36.

The monitoring device 2 comprises a body portion 78 and a support structure 72 formed to prevent the monitoring device 2 from falling further into lower portions of the post member 36. As it can be seen in Fig. 7B, the support structure 72 is formed as a flange protruding from the body portion 78. The flange extends perpendicular to the longitudinal axis of the body portion 78.

Wing structures 74 protrude from the body portion 78. The wing structures 74 are rotatably attached to the portion 78 and therefore the wing structures 74 are moveably arranged. In Fig. 7A the angle α between the wing structures 74 and the body portion 78 is larger than the angle β between the wing structures 74 and the body portion 78 in Fig. 7B, in which the wing structures 74 presses against the inner portion of the post member 36 and hereby mechanically secures the body portion 78 centrally within the post member 36. The monitoring device 2 comprises an antenna 12 protruding from the top portion of the monitoring device 2. Accordingly, the antenna 12 is not covered by the post member 36 when the monitoring device 2 is mounted in the post member 36.

Fig. 7C illustrates a cross-sectional view of a monitoring device 2 according to the invention in a configuration, in which the monitoring device 2 has been mounted in the open end of the post member 36. The monitoring device 2 comprises a centrally arranged body portion 78 and a support structure 72 formed as a flange protruding therefrom. An antenna 12v protrudes upwards from the top portion of the monitoring device 2. Resilient members 80 are provided at the side portions of the body portion 78. The resilient members 80 abut the inside portion of the post member 36 and hereby keep the monitoring device 2 centrally arranged within the post member 36. The resilient members 80 may be provided as a deformable air-containing or liquid-containing structure.

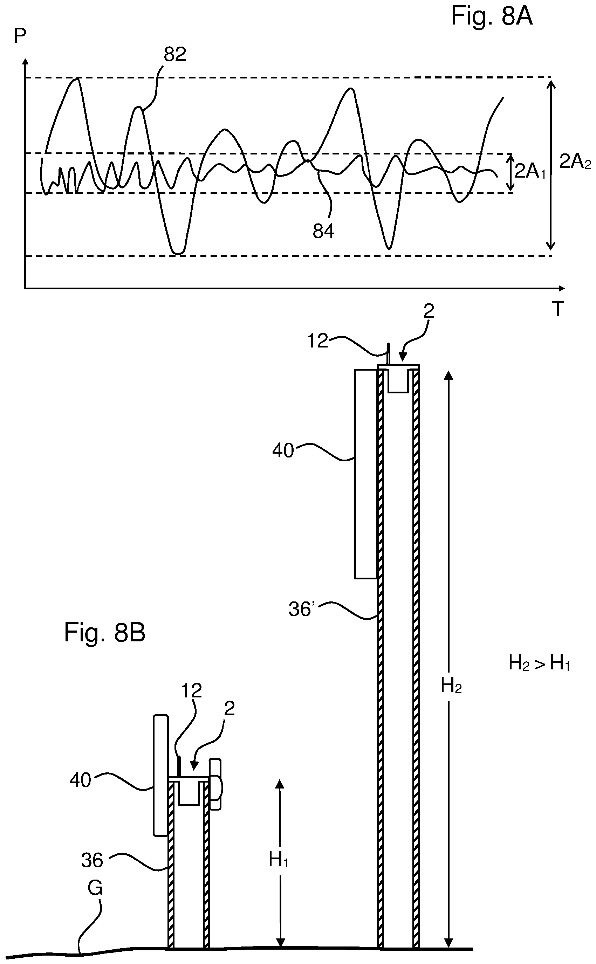

Fig. 8A illustrates a graph depicting the position P (a first signal 82 and a second signal 84) as function of time T. The first signal 82 originates from a monitoring device 2 mounted on a first low post member 36 shown in Fig. 8B, wherein the second signal 84 originates from a monitoring device 2 mounted on a second high post member 36' shown in Fig. 8C. As the monitoring device 2 mounted at the top of the high post member 36' experiences a larger range of motion than the monitoring device 2 mounted at the top of the low post member 36 (due to the higher deflection of the high post member 36') the amplitude A₂ of the second signal 84 is larger than the amplitude A₁ of the first signal 82.

In one embodiment, the monitoring device 2 is configured to generate an alarm when the position P and/or orientation of the monitoring device 2 is no longer within a predefined range for a predefined time period, wherein the predefined range is determined on the basis of the height above ground at which the monitoring device 2 is attached to a post member.

In Fig. 8B the monitoring device 2 is attached to a post member 36 in a height H₁ above the ground G. In Fig. 8C the monitoring device 2 is attached to a post member 36' in a height H₂ above the ground G. In both Fig. 8B and in Fig. 8C a signpost 40 is attached to the post member. An antenna 12 protrudes from the top portion of the monitoring device 2. It can be seen that the height H₂ of the second post member 36' is larger than the height H₁ of the first post member 36.

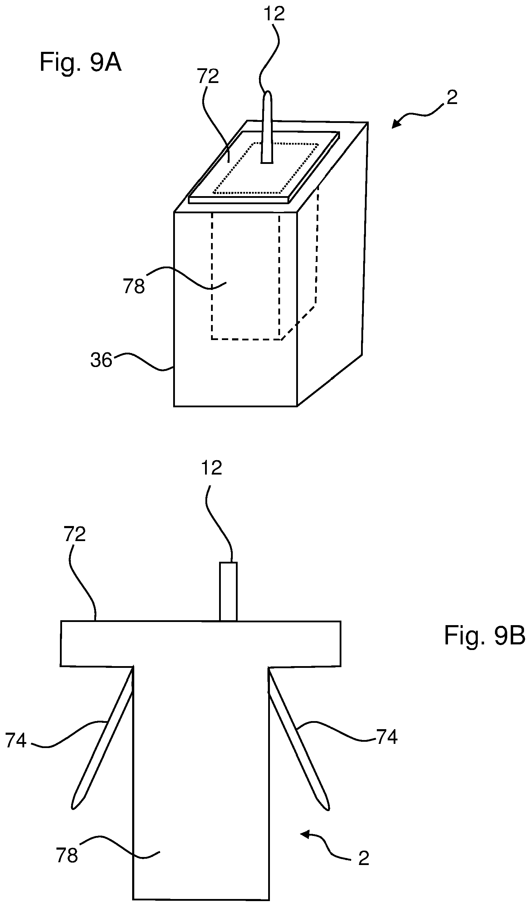

Fig. 9A illustrates a perspective view of a monitoring device 2 according to the invention. The monitoring device 2 is fixed inside a post member 36 having a rectangular cross section. The monitoring device 2 comprises a centrally arranged body portion 78 and a support structure 72 formed as a flange protruding from the body portion 78 of the monitoring device 2. An antenna 12 protrudes from the top portion of the body portion 78 of the monitoring device 2.

Fig. 9B illustrates a side view of a monitoring device 2 according to the invention. The monitoring device 2 comprises a centrally arranged body portion 78 and a support structure 72 formed as a flange protruding from the body portion 78 of the monitoring device 2. The support structure 72 is configured and arranged to allow the monitoring device 2 to be mounted in the top portion od an open post member. Two wing structures 74 protrude from the body portion 78. The wing structures 74 are rotatably attached to the portion 78. Accordingly, the wing structures 74 are moveably arranged.

### List of reference numerals

- 2: Monitoring device
- 4: Housing
- 6: Lid
- 8: Base portion
- 10: Printed circuit board (PCB)
- 11: Processing unit
- 12: Antenna
- 14: Switch
- 14': NFC tag
- 16: Battery
- 18, 18': Cable
- 20: Positioning device
- 22: Accelerometer
- 24: Oorientation detection member
- 26: Bore portion
- 28: Bore portion
- 30: Sealing member
- 32: Indicator member
- 34: Screw
- 35: Base
- 36, 36': Post member
- 38, 38': Band member
- 40: Signpost
- 42: End portion
- 44, 44': Attachment structure
- 46, 46': Resilient member
- 48: Hole
- 50: Screw
- 52: Bottom plate
- 54: End surface
- 56: Signal
- 57, 57': Attachment structure
- 58: Building
- 60: Internet
- 62: Server
- 64, 64': External device
- 66: Signal
- 68, 70: Graph
- 72: Support structure
- 74: Wing structure
- 76: Opening
- 78: Body portion
- 80: Resilient structure
- 82: First signal
- 84: Second signal
- θ, θ₁, θ₂, θ₃: Angular position
- Δθ: Change of angular position
- P, P₁, P2, P₃: Position
- ΔP: Change of position
- T, T₁, T2, T₃: Time
- T'₁, T'2, T'₃: Time
- ΔT₁, ΔT₂, ΔT'₁, ΔT'₂: Time period
- V: Vector
- G: Ground
- A₁, A₂: Amplitude
- H₁, H₂: Height

## Claims

1. A road equipment (40) monitoring device (2) configured for monitoring the position of a road equipment (40), wherein said monitoring device (2) comprises a housing (4) comprising:
- a power source (16);
- a control unit (10) electrically connected to the power source (16) and being configured to monitor the position (P) of the road equipment (40),
wherein the monitoring device (2) comprises:
- an accelerometer (20) configured to measure the position (P) of the road equipment (40);
- an orientation detection member (24) adapted to measure the orientation (θ) of the road equipment (40);
- a processing unit (11) connected to the accelerometer (20) and the orientation detection member (24) and being configured to process data from said accelerometer (20) and orientation detection member (24) and hereby generate data information;
- a communication unit configured to communicate wirelessly via the Internet (60) or an external receiver (64, 64'), wherein said communication unit is configured to wirelessly send signals (56) containing said data information about the position (P) of the road equipment (40) and the orientation (θ) of the road equipment (40),
wherein the monitoring device (2) is configured to generate an alarm when the position (P) and/or orientation (θ) of the monitoring device (2) is no longer within a predefined range for a predefined time period (ΔT₁, ΔT₂), **characterised in that** the predefined time period is a time period of one second, 5 seconds, 15 seconds, 30 seconds, one minute, two minutes, 5 minutes or a longer time period.

2. A monitoring device (2) according to claim 1, **characterised in that** the monitoring device (2) comprises a positioning device (20).

3. A monitoring device (2) according to claim 1 or claim 2, **characterised in that** the monitoring device (2) comprises one or more integrated attachment structures (38, 38', 42, 44, 44', 50, 50, 56')

4. A monitoring device (2) according to one of the preceding claims, **characterised in that** the comprises a manually operable switch (14) or a NFC tag (14'), wherein the monitoring device (2) is configured to initiate a calibrating process, in which position (P) and orientation (θ) of the monitoring device (2) is calibrated/set, wherein the monitoring device (2) is configured to be calibrated by pressing the electric switch (14) and/or the NFC tag (14') so that a reference coordinate system is defined based on the position (P) and orientation (θ) of the monitoring device (2) in the moment, in which the electric switch (14) is pressed, and/or the NFC tag (14') is activated.

5. A monitoring device (2) according to one of the preceding claims, **characterised in that** the monitoring device (2) is configured to carry out noise filtering of data from the accelerometer (20) and/or the orientation detection member (24).

6. A monitoring device (2) according to one of the preceding claims, **characterised in that** the monitoring device (2) is configured to transmit a confirmation signal, wherein the confirmation signal is a "I am alive signal" that indicates that the monitoring device (2) is turned on and is operable.

7. A monitoring device (2) according to one of the preceding claims, **characterised in that** the orientation detection member (24) is a gyroscope (24).

8. A monitoring device (2) according to one of the preceding claims 1-6, **characterised in that** the orientation detection member (24) is a compass (24).

9. A system comprising monitoring device (2) according to one of the preceding claims and a receiving unit (62) configured to directly or indirectly, wirelessly communicate with the monitoring device (2) and to transmit signals to one or more external devices (64, 64').

10. A system according to claim 9, **characterised in that** the monitoring device (2) is configurable from remote through a server (62) and/or an external device (64, 64').

11. A system according to claim 9 or 10, **characterised in that** the receiving unit (62) is configured to generate an alarm when the position (P) and/or orientation (θ) of the monitoring device (2) is no longer within a predefined range for a predefined time period.

## Patentansprüche

1. Überwachungsvorrichtung (2) für eine Straßenausrüstung (40), die zum Überwachen der Position einer Straßenausrüstung (40) konfiguriert ist, wobei die Überwachungsvorrichtung (2) ein Gehäuse (4) umfasst, umfassend:
- eine Leistungsquelle (16);
- eine Steuereinheit (10), die elektrisch mit der Leistungsquelle (16) verbunden und
dazu konfiguriert ist, die Position (P) der Straßenausrüstung (40) zu überwachen, wobei die Überwachungsvorrichtung (2) umfasst:
- einen Beschleunigungsmesser (20), der dazu konfiguriert ist, die Position (P) der Straßenausrüstung (40) zu messen;
- ein Orientierungserfassungselement (24), das zum Messen der Orientierung (θ) der Straßenausrüstung (40) angepasst ist;
- eine Verarbeitungseinheit (11), die mit dem Beschleunigungsmesser (20) und dem Orientierungserfassungselement (24) verbunden und dazu konfiguriert ist, Daten von dem Beschleunigungsmesser (20) und dem Orientierungserfassungselement (24) zu verarbeiten und dadurch Dateninformationen zu erzeugen;
- eine Kommunikationseinheit, die dazu konfiguriert ist, drahtlos über das Internet (60) oder einen externen Empfänger (64, 64') zu kommunizieren, wobei die Kommunikationseinheit dazu konfiguriert ist, drahtlos Signale (56) zu senden, die die Dateninformationen über die Position (P) der Straßenausrüstung (40) und die Orientierung (θ) der Straßenausrüstung (40) enthalten,
wobei die Überwachungsvorrichtung (2) dazu konfiguriert ist, einen Alarm zu erzeugen, wenn die Position (P) und/oder die Orientierung (θ) der Überwachungsvorrichtung (2) für eine vordefinierte Zeitspanne ( ΔT₁, ΔT₂) nicht mehr innerhalb eines vordefinierten Bereichs liegt, **dadurch gekennzeichnet, dass** die vordefinierte Zeitspanne eine Zeitspanne von einer Sekunde, 5 Sekunden, 15 Sekunden, 30 Sekunden, einer Minute, zwei Minuten, 5 Minuten oder eine längere Zeitspanne ist.

2. Überwachungsvorrichtung (2) nach Anspruch 1, **dadurch gekennzeichnet, dass** die Überwachungsvorrichtung (2) eine Positioniervorrichtung (20) umfasst.

3. Überwachungsvorrichtung (2) nach Anspruch 1 oder 2, **dadurch gekennzeichnet, dass** die Überwachungsvorrichtung (2) eine oder mehrere integrierte Befestigungsstrukturen (38, 38', 42, 44, 44', 50, 50, 56') umfasst.

4. Überwachungsvorrichtung (2) nach einem der vorhergehenden Ansprüche, **dadurch gekennzeichnet, dass** sie einen manuell betriebsfähigen Schalter (14) oder ein NFC-Tag (14') umfasst, wobei die Überwachungsvorrichtung (2) dazu konfiguriert ist, einen Kalibrierungsvorgang einzuleiten, bei dem Position (P) und Orientierung (θ) der Überwachungsvorrichtung (2) kalibriert/eingestellt werden, wobei die Überwachungsvorrichtung (2) dazu konfiguriert ist, durch Drücken des elektrischen Schalters (14) und/oder des NFC-Tags (14') kalibriert zu werden, sodass ein Referenzkoordinatensystem auf Grundlage der Position (P) und der Orientierung (θ) der Überwachungsvorrichtung (2) in dem Moment definiert wird, in dem der elektrische Schalter (14) gedrückt wird und/oder das NFC-Tag (14') aktiviert wird.

5. Überwachungsvorrichtung (2) nach einem der vorhergehenden Ansprüche, **dadurch gekennzeichnet, dass** die Überwachungsvorrichtung (2) dazu konfiguriert ist, eine Rauschfilterung von Daten des Beschleunigungsmessers (20) und/oder des Orientierungserkennungselements (24) durchzuführen.

6. Überwachungsvorrichtung (2) nach einem der vorhergehenden Ansprüche, **dadurch gekennzeichnet, dass** die Überwachungsvorrichtung (2) dazu konfiguriert ist, ein Bestätigungssignal zu übertragen, wobei das Bestätigungssignal ein "Ich bin am Leben"-Signal ist, das anzeigt, dass die Überwachungsvorrichtung (2) eingeschaltet und betriebsfähig ist.

7. Überwachungsvorrichtung (2) nach einem der vorhergehenden Ansprüche, **dadurch gekennzeichnet, dass** das Orientierungserfassungselement (24) ein Gyroskop (24) ist.

8. Überwachungsvorrichtung (2) nach einem der vorhergehenden Ansprüche 1-6, **dadurch gekennzeichnet, dass** das Orientierungserkennungselement (24) ein Kompass (24) ist.

9. System, umfassend eine Vorrichtung (2) nach einem der vorhergehenden Ansprüche und eine Empfangseinheit (62), die dazu konfiguriert ist, direkt oder indirekt drahtlos mit der Überwachungsvorrichtung (2) zu kommunizieren und Signale an eine oder mehrere externe Vorrichtungen (64, 64') zu übertragen.

10. System nach Anspruch 9, **dadurch gekennzeichnet, dass** die Überwachungsvorrichtung (2) aus einer Entfernung durch einen Server (62) und/oder einer externen Vorrichtung (64, 64') konfigurierbar ist.

11. System nach Anspruch 9 oder 10, **dadurch gekennzeichnet, dass** die Empfangseinheit (62) dazu konfiguriert ist, einen Alarm zu erzeugen, wenn die Position (P) und die Orientierung (θ) der Überwachungsvorrichtung (2) für eine vorgegebene Zeitspanne nicht länger in einem vorgegebenen Bereich ist.

## Revendications

1. Dispositif de surveillance (2) d'équipement routier (40) configuré pour surveiller la position d'un équipement routier (40), dans lequel ledit dispositif de surveillance (2) comprend un boîtier (4) comprenant :
- une source d'alimentation (16) ;
- une unité de commande (10) connectée électriquement à la source d'alimentation (16) et étant configurée pour surveiller la position (P) de l'équipement routier (40),
dans lequel le dispositif de surveillance (2) comprend :
- un accéléromètre (20) configuré pour mesurer la position (P) de l'équipement routier (40) ;
- un élément de détection d'orientation (24) apte à mesurer l'orientation (θ) de l'équipement routier (40) ;
- une unité de traitement (11) connectée à l'accéléromètre (20) et à l'élément de détection d'orientation (24) et configurée pour traiter les données provenant dudit accéléromètre (20) et de l'élément de détection d'orientation (24) et ainsi générer des informations de données ;
- une unité de communication configurée pour communiquer de manière sans fil via Internet (60) ou un récepteur externe (64, 64'), dans lequel ladite unité de communication est configurée pour envoyer de manière sans fil des signaux (56) contenant lesdites informations de données concernant la position (P) de l'équipement routier (40) et l'orientation (θ) de l'équipement routier (40),
dans lequel le dispositif de surveillance (2) est configuré pour générer une alarme lorsque la position (P) et/ou l'orientation (θ) du dispositif de surveillance (2) n'est plus dans une plage prédéfinie pendant une durée prédéfinie (ΔT₁, ΔT₂), **caractérisé en ce que** la durée prédéfinie est une durée d'une seconde, de 5 secondes, de 15 secondes, de 30 secondes, d'une minute, de deux minutes, de 5 minutes ou une durée plus longue.

2. Dispositif de surveillance (2) selon la revendication 1, **caractérisé en ce que** le dispositif de surveillance (2) comprend un dispositif de positionnement (20).

3. Dispositif de surveillance (2) selon la revendication 1 ou la revendication 2, **caractérisé en ce que** le dispositif de surveillance (2) comprend une ou plusieurs structures de fixation intégrées (38, 38', 42, 44, 44', 50, 50, 56').

4. Dispositif de surveillance (2) selon l'une des revendications précédentes, **caractérisé en ce qu'il** comprend un interrupteur actionnable manuellement (14) ou une étiquette NFC (14'), dans lequel le dispositif de surveillance (2) est configuré pour initier un processus d'étalonnage, dans lequel la position (P) et l'orientation (θ) du dispositif de surveillance (2) sont étalonnées/réglées, dans lequel le dispositif de surveillance (2) est configuré pour être étalonné en appuyant sur l'interrupteur électrique (14) et/ou l'étiquette NFC (14') de sorte qu'un système de coordonnées de référence est défini sur la base de la position (P) et de l'orientation (θ) du dispositif de surveillance (2) au moment où l'interrupteur électrique (14) est enfoncé, et/ou l'étiquette NFC (14') est activée.

5. Dispositif de surveillance (2) selon l'une des revendications précédentes, **caractérisé en ce que** le dispositif de surveillance (2) est configuré pour effectuer un filtrage du bruit des données de l'accéléromètre (20) et/ou de l'élément de détection d'orientation (24).

6. Dispositif de surveillance (2) selon l'une des revendications précédentes, **caractérisé en ce que** le dispositif de surveillance (2) est configuré pour transmettre un signal de confirmation, dans lequel le signal de confirmation est un « signal vivant » qui indique que le dispositif de surveillance (2) est allumé et peut fonctionner.

7. Dispositif de surveillance (2) selon l'une des revendications précédentes, **caractérisé en ce que** l'élément de détection d'orientation (24) est un gyroscope (24).

8. Dispositif de surveillance (2) selon l'une des revendications précédentes 1 à 6, **caractérisé en ce que** l'élément de détection d'orientation (24) est un compas (24).

9. Système comprenant un dispositif de surveillance (2) selon l'une des revendications précédentes et une unité de réception (62) configurée pour communiquer directement ou indirectement, de manière sans fil avec le dispositif de surveillance (2) et pour transmettre des signaux à un ou plusieurs dispositifs externes ( 64, 64').

10. Système selon la revendication 9, **caractérisé en ce que** le dispositif de surveillance (2) est configurable à distance par l'intermédiaire d'un serveur (62) et/ou d'un dispositif externe (64, 64').

11. Système selon la revendication 9 ou 10, **caractérisé en ce que** l'unité de réception (62) est configurée pour générer une alarme lorsque la position (P) et/ou l'orientation (θ) du dispositif de surveillance (2) n'est plus dans une plage prédéfinie pour une durée prédéfinie.
